# FASCICULE DE BREVET EUROPEEN

(11) **EP 4 048 475 B1**
(45) Date de publication et mention de la délivrance du brevet: **17.05.2023**
(21) Numéro de dépôt: 20807073.0
(22) Date de dépôt: 20.10.2020
(51) Int. Cl.: B24B 39/02

(54) **DISPOSITIF POUR L'EXPANSION A FROID D'UN PERÇAGE DEBOUCHANT**
VORRICHTUNG ZUR KALTERWEITERUNG EINER DURCHGANGSBOHRUNG
DEVICE FOR COLD EXPANSION OF A THROUGH BORE

(30) Priorité: 25.10.2019 FR 1911979
(43) Date de publication de la demande: 31.08.2022
(73) Titulaire: Safran Helicopter Engines, 64510 Bordes (FR)
(72) Inventeur: VERNAULT, Cyril Roger, 77550 Moissy-Cramayel (FR); BONNARDEL, Quentin Robert Marcel, 77550 Moissy-Cramayel (FR); CRABOS, Fabrice, 77550 Moissy-Cramayel (FR)
(74) Mandataire: Gevers & Orès
(86) Numéro de dépôt international: PCT/FR2020/051891
(87) Numéro de publication internationale: WO 2021/079056

(56) Documents cités:
- US-A- 2 726 704
- US-B1- 6 622 570

## Description

### Domaine technique de l'invention

L'invention concerne un dispositif pour l'expansion à froid d'un perçage débouchant, et plus particulièrement un dispositif de type brunissoir pour l'expansion à froid d'un perçage formé dans une roue d'injection d'un moteur d'hélicoptère.

### Arrière-plan technique

Les moteurs d'hélicoptère sont généralement réalisés sous la forme de turbomachines appelées turbomoteurs qui comportent d'amont en aval, suivant le flux d'écoulement des gaz, au moins un compresseur haute pression, une chambre de combustion annulaire, et au moins une turbine haute pression. Le compresseur haute pression et la turbine haute pression sont liés en rotation l'un à l'autre par un arbre.

Pour des raisons de compacité, de tels turbomoteurs emploient généralement, en amont de la chambre de combustion, un compresseur haute pression qui est un compresseur axialo-centrifuge et qui à ce titre est alimenté avec des gaz d'orientation axiale, soit directement, soit par un compresseur axial basse pression, et qui les comprime radialement en direction d'un diffuseur chargé de redresser axialement le flux d'air comprimé pour alimenter radialement par sa périphérie extérieure une chambre de combustion. L'air alimentant la chambre de combustion est alors mélangé à du carburant et enflammé afin d'alimenter la turbine haute pression et éventuellement une turbine basse pression en aval de la turbine haute pression.

De par cette configuration, la chambre de combustion nécessite d'être alimentée en carburant en un point différent de l'entrée d'air périphérique extérieure et à cet effet elle peut être alimentée radialement par sa périphérie intérieure.

Pour cette raison, la chambre de combustion comporte généralement une partie annulaire intérieure qui est alimentée intérieurement par une roue d'injection, solidaire de l'arbre qui lie le compresseur à la turbine. Cet arbre est creux, afin de permettre l'alimentation en carburant de la roue d'injection avec laquelle il communique. La roue d'injection comporte une pluralité de perçages d'orientation radiale qui distribuent le carburant à l'intérieur de la chambre de combustion.

Une telle roue d'injection est généralement réalisée en un alliage à base de nickel.

Lors de l'utilisation du turbomoteur, les perçages sont fortement sollicités par les importantes contraintes thermomécaniques auxquelles la roue d'injection est soumise. Ces contraintes sollicitent la roue d'injection en fatigue et peuvent à terme conduire à une fissuration puis à une rupture de la roue d'injection.

Une solution connue pour retarder la fissuration de la roue d'injection consiste à appliquer un traitement aux perçages de celle-ci en les soumettant à une opération d'expansion à froid visant à écrouir le matériau de la roue autour de ses perçages et à produire également des contraintes résiduelles de compression autour des perçages qui permettent donc de réduire l'effet des sollicitations thermomécaniques et ainsi retarder la propagation de fissures de fatigue auxquelles les perçages sont soumis.

Pour réaliser une telle expansion à froid, on fait conventionnellement passer au travers de chaque perçage un brunissoir en acier dans le but de déformer plastiquement la roue d'injection autour de chaque perçage afin d'en écrouir le matériau et d'augmenter ainsi sa résistance à la fatigue. Une opération similaire, appliquée à un tube, est décrite dans le document US-2.726.704-A1, et est décrite par roulage d'un galet dans le document US-6.622.570-B1.

Le brunissoir est monté à l'extrémité d'un mandrin puis inséré dans chaque perçage de manière à parcourir toute la longueur du perçage.

Plusieurs configurations sont actuellement connues. Dans la majorité des cas, le brunissoir est tiré directement à travers chaque perçage ou à travers une douille qui est reçue préalablement dans chaque perçage, pour éviter une dégradation du matériau du perçage lors du passage du brunissoir. Cette configuration rend cette opération particulièrement malaisée car elle nécessite l'introduction d'une douille dans chaque perçage préalablement à l'opération d'expansion à froid puis son retrait sans endommager le perçage. Cette méthode présente également une limite d'utilisation dans le cas de pièces constituées d'un matériau à haute résistance dont les trous à expanser sont de petite section et de longueur significative; les propriétés mécaniques du matériau constituant le mandrin étant alors insuffisantes pour pouvoir tirer le brunissoir au travers du perçage sans se rompre.

Selon une autre configuration connue, le brunissoir est positionné à l'extrémité d'un mandrin et poussé au travers de chaque perçage. Toutefois, le positionnement du brunissoir à l'extrémité du mandrin nécessite une parfaite coaxialité du mandrin et du perçage si l'on désire éviter toute rupture de l'outil. En outre, le perçage nécessite une lubrification performante qui est généralement réalisée à l'aide de lubrifiants nécessitant un séchage préalable, et comportant par ailleurs des substances cancérogènes telles que de l'antimoine.

### Résumé de l'invention

L'invention remédie à cet inconvénient en proposant un dispositif d'expansion à froid comportant un brunissoir perfectionné apte à se centrer spontanément dans le perçage devant faire l'objet d'une opération d'expansion à froid.

Dans ce but, l'invention propose, pour l'écrouissage d'un perçage débouchant de première longueur déterminée formé dans une pièce de turbomachine, notamment une roue d'injection de moteur d'hélicoptère, un dispositif d'expansion à froid comportant au moins un mandrin porteur d'un brunissoir et un moyen de poussée axiale dudit mandrin, caractérisé en ce qu'il comporte au moins :
- un guide tubulaire, configuré pour entourer le mandrin et le brunissoir, et configuré pour guider le brunissoir jusqu'au perçage selon une course d'abordage,
- un premier moyen de fixation magnétique agencé à une extrémité libre du mandrin,
- le brunissoir, de deuxième longueur déterminée, comportant une extrémité libre utilisée comme surface de travail et une extrémité opposée comportant un second moyen de fixation magnétique, complémentaire du premier moyen de fixation magnétique,
   et en ce que le moyen de poussée axiale est mobile selon une course au moins supérieure à une somme de la course d'abordage, de la première longueur du perçage, et de la deuxième longueur du brunissoir.

Selon d'autres caractéristiques du dispositif d'expansion à froid :
- la surface de travail s'étend suivant toute une longueur axiale du brunissoir entre l'extrémité libre du brunissoir et son extrémité comportant le second moyen de fixation magnétique,
- la surface de travail présente une section axiale semi-elliptique, tronconique, ou curviligne,
- le brunissoir comporte une âme en acier de dureté et résistance adaptées à un matériau de la pièce pour agrandir et écrouir le perçage,
- l'âme du brunissoir est recouverte d'un revêtement choisi en fonction des matériaux constitutifs de la pièce et du brunissoir pour limiter les frottements statique et dynamique entre ledit brunissoir et ladite pièce,
- le moyen de poussée axiale dudit mandrin est une presse,
- le brunissoir comporte une extrémité libre caractérisée par un diamètre maximal qui est configuré pour être inférieur ou égal au diamètre du perçage avant expansion, et une extrémité opposée comportant le second moyen de fixation et un diamètre minimal configuré pour être supérieur ou égal au diamètre du perçage après expansion,
- le dispositif d'expansion à froid est adapté à une pièce de turbomachine en alliage de nickel et l'âme du brunissoir est une âme en acier très haute résistance du type E80DCV40 ou Z100CD17,
- le dispositif d'expansion à froid est adapté à une pièce de turbomachine en alliage de nickel et le revêtement du brunissoir est :
   - un revêtement à base de lubrifiants solides choisis parmi MoS2, WS2, graphite, fluorure de graphite, talc, et leur mélange, déposés par un procédé de projection et/ou par un procédé de dépôt physique en phase vapeur et/ ou par un dépôt chimique en phase vapeur, selon une épaisseur de 0,5 à 5 µm, et/ou
   - un revêtement d'augmentation de dureté déposé par un procédé d'implantation ionique de Bore ou d'Azote et/ou un procédé de dépôt physique en phase vapeur de nitrures TiN, et/ou CrN selon une épaisseur 0,5 à 5 µm, et/ou
   - un revêtement mixte de forte dureté et de coefficient de friction réduit de type carbone amorphe ou Carbure de tungstène/Carbone WC/C déposé par un procédé de dépôt physique en phase vapeur d'épaisseur 0,5 à 4 µm.

L'invention concerne aussi un procédé d'expansion à froid pour l'écrouissage d'au moins un perçage débouchant formé dans une pièce de turbomachine, telle qu'une roue d'injection de moteur d'hélicoptère, à l'aide d'un dispositif du type décrit précédemment, caractérisé en ce qu'il comporte :
- une première étape au cours de laquelle on étend le mandrin hors du guide,
- une deuxième étape au cours de laquelle on fixe un brunissoir de taille adaptée au perçage à écrouir à l'extrémité du mandrin,
- une troisième étape au cours de laquelle on rétracte le mandrin et le brunissoir dans le guide,
- une quatrième étape au cours de laquelle on aligne le brunissoir avec le perçage,
- une cinquième étape au cours de laquelle on actionne la presse pour pousser le brunissoir à l'aide du mandrin au travers du perçage débouchant en écrouissant ledit perçage jusqu'à ce qu'il en ressorte du côté opposé à son introduction,
- une sixième étape au cours de laquelle on arrête la course du mandrin et on ôte le brunissoir du mandrin,
- une septième étape au cours de laquelle on rétracte le mandrin au travers du perçage.
- une huitième étape au cours de laquelle on récupère le brunissoir du côté de la face débouchante du perçage expansé afin de pouvoir le réutiliser.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue schématique d'un turbomoteur destiné à la motorisation d'un hélicoptère ;
[Fig. 2] la figure 2 est une vue schématique d'une première étape d'un procédé d'expansion à froid selon l'invention ;
[Fig. 3] la figure 3 est une vue schématique d'une deuxième étape d'un procédé d'expansion à froid selon l'invention ;
[Fig. 4] la figure 4 est une vue schématique d'une troisième étape d'un procédé d'expansion à froid selon l'invention ;
[Fig. 5] la figure 5 est une vue schématique en coupe axiale d'un premier mode de réalisation d'un brunissoir selon l'invention ;
[Fig. 6] la figure 6 est une vue schématique en coupe axiale d'un deuxième mode de réalisation d'un brunissoir selon l'invention ;
[Fig. 7] la figure 7 est une vue schématique en coupe axiale d'un troisième mode de réalisation d'un brunissoir selon l'invention ;
[Fig. 8] la figure 8 est un diagramme bloc illustrant les étapes d'un procédé d'expansion à froid selon l'invention.

### Description détaillée de l'invention

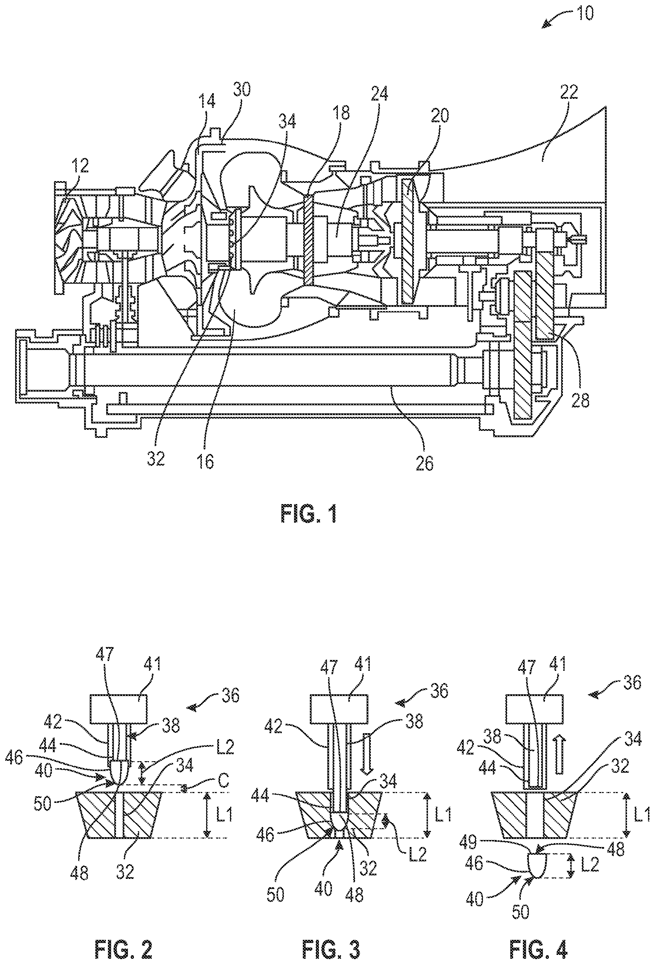

On a représenté à la figure 1 un turbomoteur 10 destiné à motoriser un hélicoptère.

De manière connue, le turbomoteur 10 est une turbomachine qui comporte, d'amont en aval selon le sens de l'écoulement des gaz, et à titre d'exemple non limitatif, un compresseur 12 basse pression, un compresseur 14 haute pression, au moins une chambre de combustion 16, une turbine 18 haute pression, une turbine libre 20 basse pression, et une tuyère d'échappement 22. Le compresseur 14 haute pression et la turbine 18 haute pression sont reliés par un arbre 24 et forment avec lui le module générateur de gaz du turbomoteur. La turbine basse pression 20 est libre, et indépendante du compresseur haute pression 12. Elle entraîne un arbre de sortie 26 par l'intermédiaire d'un réducteur 28.

Le compresseur basse pression 12 est un compresseur axial qui envoie de l'air compressé axialement au compresseur haute pression 14 qui est un compresseur axialo-centrifuge, c'est-à-dire qu'il reçoit un flux d'air sensiblement axial et le compresse de manière à produire un flux d'air compressé sensiblement radial. Ce flux d'air compressé est ensuite redressé par l'intermédiaire d'un diffuseur 30 de manière à pénétrer axialement dans la périphérie extérieure de la chambre de combustion 16, qui est sensiblement annulaire.

L'air alimentant la chambre de combustion 16 est mélangé à du carburant provenant d'injecteurs de carburant et il est enflammé afin d'alimenter la turbine haute pression 18 en gaz à haute énergie et la turbine libre basse pression 20.

De par cette configuration, la chambre de combustion 16 nécessite d'être alimentée en carburant en un point différent de l'entrée d'air périphérique extérieure car le diffuseur 30 ne permet pas de disposer d'injecteurs à cet endroit. A cet effet, elle peut être alimentée radialement par sa périphérie intérieure.

A cet effet, la chambre de combustion comporte généralement une partie annulaire intérieure qui est alimentée intérieurement par une roue d'injection 32 rotative, qui est solidaire de l'arbre 24.

L'arbre 24 est creux et il alimente intérieurement la roue d'injection 32 qui débite le carburant par centrifugation au travers des perçages 34 agencés à sa périphérie. Cette configuration est particulièrement avantageuse car elle permet un excellent brassage du carburant qui est pulvérisé à l'intérieur de la chambre de combustion 16.

Une telle roue d'injection 32 est généralement réalisée en un alliage à base de nickel.

Lors de l'utilisation du turbomoteur 10, les perçages 34 sont fortement sollicités par les importantes contraintes thermomécaniques auxquelles la roue d'injection 32 est soumise.

En effet, la roue d'injection 32 est soumise à des efforts centrifuges et elle est placée dans une zone extrêmement chaude et peu ventilée du turbomoteur 10. Les contraintes thermomécaniques sollicitent la roue d'injection 32 en fatigue et peuvent à terme conduire à une fissuration de la route injection 32 à partir de ses perçages 34 puis à une rupture de la roue d'injection 32.

Une solution connue pour retarder la propagation des fissures de fatigue de la roue 32 d'injection consiste à appliquer un traitement aux perçages 34 de celle-ci en les soumettant à une opération d'expansion à froid visant à écrouir le matériau de la roue 32 autour de ses perçages 34. Une telle opération a pour but d'écrouir le matériau de la roue 32 localement autour des perçages 34 et de produire autour de ses perçages 34 des gradients de dureté et de contraintes résiduelles de compression visant à atténuer les sollicitations thermomécaniques auxquelles les perçages 34 sont soumis.

Pour réaliser une telle expansion à froid, on fait conventionnellement passer au travers de chaque perçage, directement ou indirectement, un brunissoir en acier dans le but de déformer plastiquement la roue d'injection autour de chaque perçage afin d'en écrouir le matériau et d'augmenter ainsi sa résistance à la tenue en fatigue.

Un brunissoir consiste en un élément de forme globalement cylindrique ou tronconique en acier, d'un diamètre légèrement supérieur à celui du perçage 34 à écrouir qui est déplacé le long du perçage afin de l'agrandir en écrasant localement autour de la périphérie du perçage 34 le matériau de ce perçage 34 afin de l'écrouir.

Le brunissoir est monté à l'extrémité d'un mandrin puis inséré dans chaque perçage de manière à parcourir toute la longueur du perçage 34.

Selon une configuration connue, le brunissoir est fixé à l'extrémité d'un mandrin et poussé au travers de chaque perçage, avec ou sans douille. Toutefois, le montage fixe du brunissoir à l'extrémité du mandrin nécessite une parfaite coaxialité du mandrin et du perçage 34 ce qui nécessite des réglages longs et fastidieux si l'on désire éviter toute rupture de l'outil. En outre, dans le cas d'une utilisation sans douille, le perçage 34 nécessite une lubrification performante qui est généralement réalisée à l'aide de lubrifiants nécessitant un séchage préalable, ce qui rallonge l'opération d'écrouissage.

De plus, de tels lubrifiants peuvent contenir des substances cancérogènes telles que de l'antimoine.

L'invention remédie à cet inconvénient en proposant une nouvelle conception d'un dispositif 36 d'expansion à froid pour l'écrouissage d'un perçage 34 d'une roue d'injection 32.

Comme l'illustrent les figures 2 à 4, le dispositif 36 d'expansion à froid selon l'invention est destiné à permettre l'expansion d'un perçage 34 de première longueur L1 déterminée formé dans la roue d'injection 32 du turbomoteur 10 précédemment décrit.

Il sera compris que cette disposition n'est pas limitative et que le dispositif 36 pourrait être utilisé pour réaliser l'expansion à froid de tout autre perçage ou alésage de la turbomachine, sans limitation de l'invention.

Le dispositif 36 comporte, de manière connue, au moins un mandrin porteur 38 d'un brunissoir 40 et un moyen de poussée axiale 41 du mandrin 38.

Toutefois, à la différence des dispositifs d'expansion à froid connu de l'état de la technique, le dispositif 36 comporte différents éléments permettant le guidage du brunissoir 40 puis son passage par poussée au travers du perçage 34, et enfin sa récupération du côté opposé du perçage 34 par lequel il a été introduit.

À cet effet, le dispositif 36 comporte au moins un guide tubulaire 42 qui est configuré pour entourer le mandrin 38 et le brunissoir 40, et qui est configuré pour guider le brunissoir 40 jusqu'au perçage 34 selon une course d'abordage C.

En effet, le brunissoir 40 est mobile à l'extrémité du mandrin 38 à partir d'une position de repos, qui a été représenté à la figure 2, dans laquelle il est agencé à une distance du perçage 34 à écrouir correspondant à la course d'abordage C, notamment de manière à permettre son déplacement en vue de l'aligner en regard du perçage 34. Le brunissoir 40 doit donc parcourir la course d'abordage C avant d'attaquer le perçage 34.

Le dispositif 36 comporte aussi avantageusement un premier moyen de fixation magnétique 47 agencé à une extrémité libre 44 du mandrin 38. Ce premier moyen de fixation magnétique 47 peut notamment consister en un aimant permanent ou en un électroaimant. Ce premier moyen de fixation magnétique 47 est destiné à permettre la fixation du brunissoir 40, le centrage du brunissoir 40 par rapport au perçage 34, et est, comme on le verra dans la suite de la présente description le retrait du brunissoir 40 à l'issue de l'opération d'expansion à froid.

Le dispositif 36 comporte également le brunissoir 40 qui est d'une deuxième longueur L2 déterminée. Le brunissoir 40 comporte une extrémité libre 50 comportant une surface de travail 46 et une extrémité opposée 48 comportant un second moyen de fixation magnétique 49, complémentaire du premier moyen de fixation magnétique 47. De ce fait, le brunissoir 40 est apte à être fixé à l'extrémité du mandrin 38 par l'intermédiaire de la coopération de son extrémité 48 comportant le second moyen de fixation magnétique 49 coopérant avec le premier moyen de fixation magnétique 47, et il est susceptible d'en être retiré aisément de la même façon.

Conformément à l'invention, le moyen de poussée axiale 41 est mobile selon une course au moins supérieure à une somme de la course d'abordage C, de la première longueur de l'alésage L1, et de la deuxième longueur L2 du brunissoir 40.

Cette course permet, comme l'illustrent les figures 1 à 3, de faire aborder le perçage 34 par le brunissoir 40, puis de pousser le brunissoir 40 au travers du perçage 34 suivant toute sa longueur, et enfin de l'en ressortir du côté opposé à son introduction.

Dans le mode de réalisation préféré de l'invention, le moyen de poussée axiale 41 est une presse, mais il sera compris que cette configuration n'est pas limitée de l'invention et qu'il pourrait s'agir d'un actionneur d'un autre type.

S'agissant d'un brunissoir 40 qui est destiné à assurer l'expansion à froid du perçage 34 par contact direct, un soin tout particulier doit être accordé aux matériaux de ce brunissoir 40 à cet effet, le brunissoir 40 comporte une âme en acier de dureté et résistance adaptées à un matériau de la pièce dont il doit agrandir et écrouir le perçage 34, c'est-à-dire ici la roue d'injection 32.

Notamment, dans le cas d'une roue d'injection 32 réalisée, comme cela est souvent le cas, en alliage de nickel, l'âme du brunissoir 40 est une âme en acier à très haute résistance du type E80DCV40 ou Z100CD17.

Le choix du matériau de l'âme du brunissoir 40 est déterminant pour éviter toute détérioration du brunissoir 40 pouvant introduire un débris entre le brunissoir 40 et la surface du perçage 34, débris qui aurait pour effet d'endommager la surface du perçage 34, avec des risques de fissuration potentielle à partir de cet endommagement.

Par ailleurs, l'âme du brunissoir 40 est recouverte d'un revêtement qui est lui aussi choisi en fonction des matériaux constitutifs de la pièce et du brunissoir 40, c'est-à-dire de la roue d'injection 32, pour limiter les frottements statique et dynamique entre le brunissoir 40 et la roue d'injection 32.

S'agissant toujours d'une roue d'injection 32 en alliage de nickel, le revêtement du brunissoir peut-être de différents types.

Il peut s'agir d'un revêtement à base de lubrifiants solides choisis parmi MoS2, WS2, graphite, fluorure de graphite, talc, et leur mélange, qui sont déposés par un procédé de projection et/ou par un procédé de dépôt physique en phase vapeur et/ ou par un dépôt chimique en phase vapeur, le tout selon une épaisseur de 0,5 à 5 µm.

Il peut également s'agir d'un revêtement d'augmentation de dureté déposé par un procédé d'implantation ionique de Bore ou d'Azote et/ou par un procédé de dépôt physique en phase vapeur de nitrures TiN, et/ou CrN, le tout selon une épaisseur 0,5 à 5 µm.

Enfin, il peut s'agir d'un revêtement mixte de forte dureté et de coefficient de friction réduit de type carbone amorphe ou Carbure de tungstène/Carbone WC/C déposé par un procédé de dépôt physique en phase vapeur, selon une épaisseur 0,5 à 4 µm.

Par ailleurs, la géométrie du brunissoir 40 est elle aussi déterminante.

Comme le brunissoir 40 est destiné à traverser l'intégralité du perçage 34, et à ressortir de celui-ci du côté opposé où il a été introduit, il est nécessaire que sa surface de travail 46 s'étende suivant toute la longueur axiale L2 du brunissoir entre une extrémité du brunissoir 40 et son extrémité 48 comportant le second moyen de fixation magnétique.

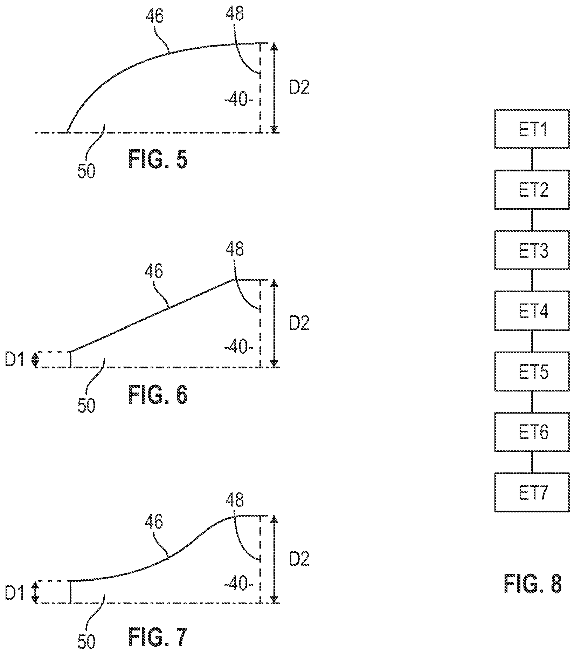

Comme l'illustrent les figures 5 à 7, la surface de travail 46 peut présenter différentes sections axiales.

Par exemple, comme l'illustre la figure 5, la surface de travail 46 peut présenter une section axiale semi-elliptique. Comme l'illustre la figure 6, la surface de travail 46 peut présenter une section axiale tronconique. Enfin, comme l'illustre la figure 7, la surface de travail 46 peut présenter une section axiale mixte, c'est-à-dire curviligne.

Il sera compris que l'extrémité libre 50 du brunissoir a un diamètre maximal qui est configuré pour être inférieur ou égal au diamètre du perçage 34 avant expansion. Sur la figure 5, ce diamètre est nul du fait de la section semi-elliptique du brunissoir 40, mais dans les modes de réalisation des figures 6 et 7, ce diamètre D1 est non nul.

De même, l'extrémité 48 comportant le second moyen de fixation du brunissoir 40 a un diamètre minimal D2 qui est configuré pour être supérieur ou égal au diamètre du perçage 34 après expansion.

Dans cette configuration, l'opération d'expansion à froid des perçages 34 d'une roue d'injection 32 peut être menée à l'aide du dispositif 36 précédemment décrit.

Selon une première étape ET1 (non représentée), on étend le mandrin 38 nu hors du guide 42, de manière à rendre accessible son extrémité libre 44.

Puis, au cours d'une deuxième étape ET2 (non représentée), on fixe un brunissoir 40 de taille adaptée au perçage 34 à écrouir à l'extrémité du mandrin 38. Puis, au cours d'une troisième étape ET3, on rétracte le mandrin 38 et le brunissoir 40 dans le guide 42, selon la configuration de la figure 2.

Puis on aligne le brunissoir 40 avec le perçage 34 au cours d'une quatrième étape ET4. S'ensuit une cinquième étape ET5 au cours de laquelle on actionne la presse 41 pour pousser le brunissoir 40 à l'aide du mandrin 38 au travers du perçage débouchant 34 en écrouissant ledit perçage, comme représenté à la figure 3, jusqu'à ce qu'il en ressorte du côté opposé à son introduction.

Puis, au cours d'une sixième étape ET6, on arrête la course du mandrin 38 et on ôte le brunissoir 40 du mandrin 38 comme représenté à la figure 4.

Le mandrin 38 est alors libre d'être rétracté au travers du perçage 34 au cours d'une dernière étape ET7 (non représentée), sans risque d'endommager le perçage 34.

L'invention permet donc de diminuer sensiblement les temps de travail consacrés à l'écrouissage des perçages 34 d'une pièce de turbomachine, et de limiter les risques d'endommagement des perçages de celle-ci ou de l'outillage utilisé.

## Revendications

1. Dispositif (36) d'expansion à froid pour l'écrouissage d'un perçage (34) débouchant de première longueur déterminée (L1) formé dans une pièce (32) de turbomachine, notamment une roue d'injection de moteur d'hélicoptère, comportant au moins un mandrin (38) porteur d'un brunissoir (40) et un moyen (41) de poussée axiale dudit mandrin (38), **caractérisé en ce qu'**il comporte au moins :
- un guide tubulaire (42), entourant le mandrin (38) et le brunissoir (40), et configuré pour guider le brunissoir (40) jusqu'au perçage (34) selon une course d'abordage (C),
- un premier moyen de fixation magnétique (47) agencé à une extrémité libre (44) du mandrin (38),
- le brunissoir (40), de deuxième longueur (L2) déterminée, comportant une extrémité libre (50) comportant une surface de travail (46) et une extrémité opposée (48) comportant un second moyen de fixation magnétique (49), complémentaire du premier moyen de fixation magnétique (47),
et **en ce que** le moyen de poussée axiale (41) est mobile selon une course au moins supérieure à une somme de la course d'abordage (C), de la première longueur du perçage (L1), et de la deuxième longueur (L2) du brunissoir (40).

2. Dispositif (36) d'expansion à froid selon la revendication précédente, **caractérisé en ce que** la surface de travail (46) s'étend suivant toute une longueur axiale (L2) du brunissoir (40) entre l'extrémité libre (50) du brunissoir et son extrémité (48) comportant le second moyen de fixation magnétique (49).

3. Dispositif (36) d'expansion à froid selon la revendication précédente, **caractérisé en ce que** la surface de travail (46) présente une section axiale semi-elliptique, tronconique, ou curviligne.

4. Dispositif (36) d'expansion à froid selon l'une des revendications 2 ou 3, **caractérisé en ce que** le brunissoir (40) comporte une âme en acier de dureté et résistance adaptées à un matériau de la pièce (32) pour agrandir et écrouir le perçage (34).

5. Dispositif (36) d'expansion à froid selon la revendication 4, **caractérisé en ce que** l'âme du brunissoir est recouverte d'un revêtement choisi en fonction des matériaux de la pièce (32) et du brunissoir (40) pour limiter les frottements statique et dynamique entre ledit brunissoir (40) et ladite pièce (32).

6. Dispositif (36) d'expansion à froid selon l'une des revendications précédentes, **caractérisé en ce que** le moyen de poussée axiale (41) dudit mandrin (38) est une presse.

7. Dispositif (36) d'expansion à froid selon l'une des revendications 2 à 6, dans lequel l'extrémité libre (50) du brunissoir (40) a un diamètre maximal (D1) qui est configuré pour être inférieur ou égal au diamètre du perçage (34) avant expansion, l'extrémité (48) comportant le second moyen de fixation (49) du brunissoir (40) ayant un diamètre minimal (D2) configuré pour être supérieur ou égal au diamètre du perçage (34) après expansion.

8. Dispositif (36) d'expansion à froid selon l'une des revendications 4 à 7 adapté à une pièce (32) de turbomachine en alliage de nickel, **caractérisé en ce que** l'âme du brunissoir (40) est une âme en acier à très haute résistance du type E80DCV40 ou Z100CD17.

9. Dispositif (36) d'expansion à froid selon l'une des revendications 5 à 8 adapté à une pièce (32) de turbomachine en alliage de nickel, **caractérisé en ce que** le revêtement du brunissoir (40) est :
- un revêtement à base de lubrifiants solides choisis parmi MoS2, WS2, graphite, fluorure de graphite, talc, et leur mélange, déposés par un procédé de projection et/ou par un procédé de dépôt physique en phase vapeur et/ ou par un dépôt chimique en phase vapeur, selon une épaisseur de 0,5 à 5 µm, et/ou
- un revêtement d'augmentation de dureté déposé par un procédé d'implantation ionique de Bore ou d'Azote et/ou un procédé de dépôt physique en phase vapeur de nitrures TiN, et/ou CrN selon une épaisseur 0,5 à 5 µm, et/ou
- un revêtement mixte de forte dureté et de coefficient de friction réduit de type carbone amorphe ou Carbure de tungstène/Carbone WC/C déposé par un procédé de dépôt physique en phase vapeur d'épaisseur 0,5 à 4 µm.

10. Procédé d'expansion à froid pour l'écrouissage d'au moins un perçage (34) débouchant formé dans une pièce de turbomachine, telle qu'une roue d'injection (32) de moteur d'hélicoptère (10), à l'aide d'un dispositif (36) selon l'une des revendications précédentes, **caractérisé en ce qu'**il comporte :
- une première étape (ET1) au cours de laquelle on étend le mandrin (38) hors du guide (42),
- une deuxième étape (ET2) au cours de laquelle on fixe un brunissoir (40) de taille adaptée au perçage (34) à écrouir à l'extrémité (44) du mandrin (38),
- une troisième étape (ET3) au cours de laquelle on rétracte le mandrin (38) et le brunissoir (40) dans le guide (42),
- une quatrième étape (ET4) au cours de laquelle on aligne le brunissoir (40) avec le perçage (34),
- une cinquième étape (ET5) au cours de laquelle on actionne la presse (41) pour pousser le brunissoir (40) à l'aide du mandrin (38) au travers du perçage (34) débouchant en écrouissant ledit perçage (34) jusqu'à ce que le brunissoir (40) ressorte du côté opposé à son introduction,
- une sixième étape (ET6) au cours de laquelle on arrête la course du mandrin (38) et on ôte le brunissoir (40) du mandrin (38),
- une septième étape (ET7) au cours de laquelle on rétracte le mandrin (38) au travers du perçage (34).

## Patentansprüche

1. Vorrichtung (36) zur Kalterweiterung für die Kaltverfestigung einer Durchgangsbohrung (34) mit einer bestimmten ersten Länge (L1), die in einem Teil (32) einer Turbomaschine gebildet ist, insbesondere einem Einspritzer eines Hubschraubermotors, umfassend mindestens einen Dorn (38), der einen Polierstahl (40) trägt, und ein Mittel (41) zur axialen Verlagerung des Dorns (38), **dadurch gekennzeichnet, dass** sie mindestens Folgendes umfasst:
- eine rohrförmige Führung (42), die den Dorn (38) und den Polierstahl (40) umgibt und dazu ausgelegt ist, den Polierstahl (40) entlang einer Ansatzstrecke (C) bis zur Bohrung (34) zu führen,
- ein erstes magnetisches Befestigungsmittel (47), das an einem freien Ende (44) des Dorns (38) eingerichtet ist,
- wobei der Polierstahl (40), mit einer bestimmten zweiten Länge (L2), ein freies Ende (50) umfasst, das eine Arbeitsfläche (46) umfasst, und ein gegenüberliegendes Ende (48), das ein zweites magnetisches Befestigungsmittel (49) komplementär zum ersten magnetischen Befestigungsmittel (47) umfasst,
und dadurch, dass das Mittel (41) zur axialen Verlagerung entlang einer Strecke beweglich ist, die mindestens größer ist als eine Summe aus der Ansatzstrecke (C), der ersten Bohrlänge (L1) und der zweiten Bohrlänge (L2) des Polierstahls (40).

2. Vorrichtung (36) zur Kalterweiterung nach dem vorstehenden Anspruch, **dadurch gekennzeichnet, dass** die Arbeitsfläche (46) sich einer gesamten axialen Länge (L2) des Polierstahls (40) folgend zwischen dem freien Ende (50) des Polierstahls und seinem Ende (48), das das zweite magnetische Befestigungsmittel (49) umfasst, erstreckt.

3. Vorrichtung (36) zur Kalterweiterung nach dem vorstehenden Anspruch, **dadurch gekennzeichnet, dass** die Arbeitsfläche (46) einen halbelliptischen, kegelförmigen oder krummlinigen axialen Abschnitt aufweist.

4. Vorrichtung (36) zur Kalterweiterung nach einem der Ansprüche 2 oder 3, **dadurch gekennzeichnet, dass** der Polierstahl (40) einen Steg aus Metall mit einer an ein Material des Teils (32) angepassten Härte und Widerstandskraft umfasst, um die Bohrung (34) zu vergrößern und zu kaltverfestigen.

5. Vorrichtung (36) zur Kalterweiterung nach Anspruch 4, **dadurch gekennzeichnet, dass** der Steg des Polierstahls mit einer Beschichtung bedeckt ist, die in Abhängigkeit von den Materialien des Teils (32) und des Polierstahls (40) ausgewählt wird, um die statische und die dynamische Reibung zwischen dem Polierstahl (40) und dem Teil (32) zu begrenzen.

6. Vorrichtung (36) zur Kalterweiterung nach einem der vorstehenden Ansprüche, **dadurch gekennzeichnet, dass** das Mittel zur axialen Verlagerung (41) des Dorns (38) eine Presse ist.

7. Vorrichtung (36) zur Kalterweiterung nach einem der Ansprüche 2 bis 6, **dadurch gekennzeichnet, dass** das freie Ende (50) des Polierstahls (40) einen Höchstdurchmesser (D1) aufweist, der dazu ausgelegt ist, kleiner oder gleich dem Bohrdurchmesser (34) vor der Erweiterung zu sein, wobei das Ende (48), das das zweite Befestigungsmittel (49) des Polierstahls (40) trägt, einen Mindestdurchmesser (D2) aufweist, der dazu ausgelegt ist, größer oder gleich dem Bohrdurchmesser (34) nach der Erweiterung zu sein.

8. Vorrichtung (36) zur Kalterweiterung nach einem der Ansprüche 4 bis 7, die an ein Teil (32) einer Turbomaschine aus Nickellegierung angepasst ist, **dadurch gekennzeichnet, dass** der Steg des Polierstahls (40) ein Steg aus Stahl mit sehr hoher Widerstandskraft vom Typ E80DCV40 oder Z100CD17 ist.

9. Vorrichtung (36) zur Kalterweiterung nach einem der Ansprüche 5 bis 8, die an ein Teil (32) einer Turbomaschine aus Nickellegierung angepasst ist, **dadurch gekennzeichnet, dass** die Beschichtung des Polierstahls (40) Folgendes ist:
- eine Beschichtung auf Basis von festen Schmierstoffen, die aus MoS2, WS2, Graphit, Graphitfluorid, Talk und deren Gemischen ausgewählt werden, abgeschieden durch ein Projektionsverfahren und/oder durch ein physikalisches Gasabscheidungsverfahren und/oder durch ein chemisches Gasabscheidungsverfahren, gemäß einer Dicke von 0,5 bis 5 µm, und/oder
- eine Härtesteigerungsbeschichtung, abgeschieden durch ein Bor- oder Stickstoff-lonenimplantationsverfahren und/oder ein physikalisches Gasabscheidungsverfahren von Nitriden TiN und/oder CrN gemäß einer Dicke von 0,5 bis 5 µm, und/oder
- eine Mischbeschichtung mit starker Härte und verringertem Reibungskoeffizient vom Typ amorpher Kohlenstoff oder Wolframkarbid/WC/C-Kohlenstoff, abgeschieden durch ein physikalisches Gasabscheidungsverfahren mit einer Dicke von 0,5 bis 4 µm.

10. Verfahren zur Kalterweiterung für die Kaltverfestigung mindestens einer Durchgangsbohrung (34), die in einem Teil einer Turbomaschine gebildet ist, wie einem Einspritzer (32) eines Hubschraubermotors (10), mithilfe einer Vorrichtung (36) nach einem der vorstehenden Ansprüche, **dadurch gekennzeichnet, dass** es umfasst:
- einen ersten Schritt (ET1), bei dem der Dorn (38) außerhalb der Führung (42) erstreckt wird,
- einen zweiten Schritt (ET2), bei dem ein Polierstahl (40) mit einer an die zu hartverfestigende Bohrung (34) angepassten Größe am Ende (44) des Dorns (38) befestigt wird,
- einen dritten Schritt (ET3), bei dem der Dorn (38) und der Polierstahl (40) in der Führung (42) zurückgezogen werden,
- einen vierten Schritt (ET4), bei dem der Polierstahl (40) mit der Bohrung (34) ausgerichtet wird,
- einen fünften Schritt (ET5), bei dem die Presse (41) betätigt wird, um den Polierstahl (40) mithilfe des Dorns (38) durch die Durchgangsbohrung (34) hindurch zu drücken, indem die Bohrung (34) hartverfestigt wird, bis der Polierstahl (40) am Ende, das seiner Einführung gegenüberliegt, herausragt,
- einen sechsten Schritt (ET6), bei dem die Strecke des Dorns (38) angehalten wird und der Polierstahl (40) von dem Dorn (38) entnommen wird,
- einen siebten Schritt (ET7), bei dem der Dorn (38) durch die Bohrung (34) hindurch zurückgezogen wird.

## Claims

1. A cold expansion device (36) for work hardening a through bore (34) of a first determined length (L1) formed in a turbine engine part (32), in particular a helicopter engine injection wheel, comprising at least one chuck (38) supporting a burnisher (40) and a means (41) for axially pushing said chuck (38), **characterised in that** it comprises at least:
- a tubular guide (42), surrounding the chuck (38) and the burnisher (40), and configured to guide the burnisher (40) to the bore (34) according to a collision stroke (C),
- a first magnetic attachment means (47) arranged at a free end (44) of the chuck (38),
- the burnisher (40), of a second determined length (L2), comprising a free end (50) comprising a work surface (46) and an opposite end (48) comprising a second magnetic attachment means (49), complementary to the first magnetic attachment means (47),
and **in that** the axial pushing means (41) is movable by a stroke at least greater than a sum of the collision stroke (C), the first length (L1) of the bore, and the second length (L2) of the burnisher (40).

2. The cold expansion device (36) according to the preceding claim, **characterized in that** the work surface (46) extends along an entire axial length (L2) of the burnisher (40) between the free end (50) of the burnisher and its end (48) comprising the second magnetic attachment means (49).

3. The cold expansion device (36) according to the preceding claim, **characterized in that** the work surface (46) has a semi-elliptical, frustoconical, or curvilinear axial section.

4. The cold expansion device (36) according to one of claims 2 or 3, **characterized in that** the burnisher (40) comprises a steel web of a hardness and strength adapted to a material of the workpiece (32) for enlarging and work hardening the bore (34).

5. The cold expansion device (36) according to claim 4, **characterized in that** the web of the burnisher is covered with a coating selected as a function of the materials of the workpiece (32) and the burnisher (40) to limit static and dynamic friction between said burnisher (40) and said workpiece (32).

6. The cold expansion device (36) according to one of the preceding claims, **characterized in that** the means (41) for axially pushing said chuck (38) is a press.

7. The cold expansion device (36) according to any of the claims 2 to 6, wherein the free end (50) of the burnisher (40) has a maximum diameter (D1) that is configured to be less than or equal to the diameter of the bore (34) before expansion, the end (48) comprising the second attachment means (49) of the burnisher (40) having a minimum diameter (D2) configured to be greater than or equal to the diameter of the bore (34) after expansion.

8. The cold expansion device (36) according to one of claims 4 to 7 adapted to a turbine engine part (32) made of nickel alloy, **characterized in that** the web of the burnisher (40) is a very high strength steel web of the E80DCV40 or Z100CD17 type.

9. The cold expansion device (36) according to one of claims 5 to 8 adapted to a turbine engine part made of nickel alloy (32), **characterized in that** the coating of the burnisher (40) is:
- a coating based on solid lubricants selected from MoS2, WS2, graphite, graphite fluoride, talc, and mixtures thereof, deposited by a spraying process and/or by a physical vapour deposition process and/or by a chemical vapour deposition, in a thickness of 0.5 to 5 µm, and/or
- a hardness-increasing coating deposited by an ion implantation process of Boron or Nitrogen and/or a physical vapor deposition process of TiN, and/or CrN nitrides in a thickness of 0.5 to 5 µm, and/or
- a mixed coating of high hardness and reduced friction coefficient of amorphous carbon or tungsten carbide/WC/C carbon type deposited by a physical vapor deposition process with a thickness of 0.5 to 4 µm.

10. A cold expansion method for work hardening at least one through bore (34) formed in a turbine engine part, such as a helicopter engine (10) injection wheel (32), using a device (36) according to one of the preceding claims, **characterized in that** it comprises:
- a first step (ET1) during which the chuck (38) is extended from the guide (42),
- a second step (ET2) during which a burnisher (40) of a size adapted to the bore (34) to be work-hardened is fixed to the end (44) of the chuck (38),
- a third step (ET3) during which the chuck (38) and the burnisher (40) are retracted into the guide (42),
- a fourth step (ET4) in which the burnisher (40) is aligned with the bore (34),
- a fifth step (ET5) during which the press (41) is actuated to push the burnisher (40) by means of the chuck (38) through the through bore (34), by work hardening said bore (34) until the burnisher (40) comes out on the side opposite to its introduction,
- a sixth step (ET6) during which the stroke of the chuck (38) is stopped and the burnisher (40) is removed from the chuck (38),
- a seventh step (ET7) in which the chuck (38) is retracted through the bore (34).
